# EUROPÄISCHE PATENTSCHRIFT

(11) **EP 1 328 478 B1**
(45) Veröffentlichungstag und Bekanntmachung des Hinweises auf die Patenterteilung: **30.03.2011**
(21) Anmeldenummer: 01985694.7
(22) Anmeldetag: 14.09.2001
(51) Int. Cl.: C02F 1/28, C01G 49/02, B01J 20/06, B01D 53/26

(54) **KONTAKT- UND ADSORBER-GRANULATE**
CONTACTING AND ADSORBENT GRANULES
GRANULES DE CONTACT ET ADSORBANTS

(30) Priorität: 26.09.2000 DE 10047996; 26.09.2000 DE 10047997; 29.03.2001 DE 10115414
(43) Veröffentlichungstag der Anmeldung: 23.07.2003
(73) Patentinhaber: LANXESS Deutschland GmbH, 51369 Leverkusen (DE)
(72) Erfinder: SCHLEGEL, Andreas, 47800 Krefeld (DE); KISCHKEWITZ, Jürgen, 40883 Ratingen (DE)
(86) Internationale Anmeldenummer: PCT/EP2001/010634
(87) Internationale Veröffentlichungsnummer: WO 2002/026631

(56) Entgegenhaltungen:
- EP-A- 0 704 500
- DE-A- 19 824 379
- GB-A- 1 568 349
- US-A- 4 216 084
- US-A- 4 366 090
- US-A- 4 459 370
- US-A- 4 515 756
- US-A- 5 369 072

## Beschreibung

Die vorliegende Erfindung betrifft die Verwendung von stückigen Adsorptionsmitteln/Reaktionsmitteln bestehend aus -FeOOH - Partikeln, die durch Aluminium-, Magnesium- bzw. Titan(hydr)oxide miteinander verklebt sind, zur Reinigung von Gasen oder Flüssigkeiten.

Kontakt- und Adsorber-Granulate, auch solche auf Basis von Eisenoxiden und/oder Eisenoxihydroxiden, sind bereits beschrieben worden. Sie werden überwiegend in kontinuierlichen Verfahren eingesetzt, wobei sie sich üblicherweise in turm- bzw. kolonnenartigen Apparaten befinden, die von dem zu behandelnden Medium durchströmt werden, und an der äußeren und inneren Oberfläche der Granulate finden die chemischen bzw. physikalischen Reaktions- bzw. Adsorptionsprozesse statt. Zu diesem Zweck können pulverförmige Materialien nicht eingesetzt werden weil sie sich in Fließrichtung des Mediums verdichten und dadurch den Strömungswiderstand bis zur Blockierung des Apparates erhöhen. Wird ein Apparat durch Rückspülung gereinigt (s. unten), werden große Mengen des Pulvers ausgetragen, gehen verloren bzw. führen zu einer nicht tolerierbaren Belastung des Abwassers.

Die strömenden Medien üben jedoch auch Kräfte auf die Granulate aus, die zur Abrasion und/oder zu einer Bewegung bis hin zu heftiger Agitation der Granulate führen können. Dadurch stoßen die Granulate aneinander, und infolgedessen entsteht unerwünschter Abrieb. Dieser führt zu Verlust von Kontakt- bzw. Adsorbermaterial und Verunreinigung des zu behandelnden Mediums.

Eisenoxid und -hydroxidhaltige Adsorptionsmittel/Reaktionsmittel sind z.B. im Bereich der Wasserreinigung oder Gasreinigung vorteilhaft einsetzbar. Bei der Wasser-reinigung wird dieses Mittel in horizontal oder vertikal durchströmten Filtern bzw. Adsorberkolonnen oder durch Zugabe zu dem zu behandelnden Wasser für die Abscheidung von gelösten, suspendierten oder emulgierten organischen oder anorganischen Phosphor-, Arsen-, Antimon-, Schwefel-, Selen-, Tellur-, Beryllium- sowie Cyano- und Schwermetallverbindungen aus beispielsweise Trinkwasser, Brauchwasser, industriellem, kommunalem Abwasser, Mineral-, Weih- und Heilwasser sowie Fluß-, Gartenteich- und Agrarwasser eingesetzt. Möglich ist auch der Einsatz in sogenannten reaktiven Wänden zur Abscheidung der genannten Schadstoffe aus Grund- und Sickerwasserleitern von kontaminierten Standorten (Deponien).

Bei der Gasreinigung wird das Mittel in Adsorbern für die Bindung unerwünschter Bestandteile wie Schwefelwasserstoff, Mercaptanen und Blausäure, sowie sonstiger Phosphor-, Arsen-, Antimon-, Schwefel-, Selen-, Tellur-, sowie Cyano- und Schwermetallverbindungen in Abgasen eingesetzt. Es ist auch möglich, Gase wie HF, HCl, H₂S, SOₓ, NOₓ zu adsorbieren.

Möglich ist auch die Entfernung von Phosphor-, Arsen-, Antimon-, Selen-, Tellur-, sowie Cyano- und Schwermetallverbindungen aus Altölen und sonstigen kontaminierten organischen Lösungsmitteln.

Kontakt- und Adsorber-Granulate auf Basis von Eisenoxiden und/oder Eisenoxihydroxiden werden auch zur Katalyse chemischer Reaktionen in der Gasphase oder in der flüssigen Phase eingesetzt.

Es sind auch verschiedenartige Verfahren bekannt, um mit Hilfe von Adsorptionsmitteln die Spuren- und Schadstoffe aus wässrigen Systemen zu entfernen.

So wird der DE-A 3 120 891 ein Verfahren beschrieben, bei welchem für die Abtrennung vornehmlich von Phosphaten aus Oberflächenwasser eine Filtration über Aktivtonerde mit einer Körnung von 1 bis 3 mm erfolgt.

Zum Entfernen von Schadstoffen aus Wasser beschreibt die DE-A 3 800 873 ein Adsorptionsmittel auf der Basis von porösen Materialien wie zum Beispiel hydrophobierter Kreide mit feiner bis mittlerer Körnung.

In der DE-A 3 703 169 wird ein Verfahren zur Herstellung eines granulierten Filterstoffes zum Aufbereiten von Naturwasser offenbart. Das Adsorbens wird durch Granulierung einer wässrigen Suspension von Kaolin unter Zugabe von pulverförmigem Dolomit in einer Wirbelschicht hergestellt. Anschließend werden die Granalien bei 900 bis 950° C gebrannt.

Aus der DE-A 40 34 417 ist ein Verfahren zur Herstellung und Verwendung von hochreaktiven Reagenzien für die Abgas- und Abwasserreinigung bekannt. Beschrieben werden hier Gemische aus Ca(OH)₂ mit Zusätzen von Tonen, Steinmehlen, Flugstaub und Flugaschen, die porös hergestellt werden und eine Oberfläche von ca. 200 m²/g besitzen.

Die genannten Verfahren bzw. die hierzu eingesetzten Kontakte haben den gemeinsame Nachteil, dass die jeweilige für die selektive Adsorption von Inhaltsstoffen der zu reinigenden Medien verantwortliche Komponente, also das eigentliche Adsorbens, mit hohen Mengen an Zuschlagstoffen versetzt werden muss, um eine Formgebung zu Granulaten zuzulassen. Hierdurch erniedrigt sich in deutlichem Maße die Bindekapazität für die zu entfernenden Wasserschadstoffe. Außerdem ist die spätere Aufarbeitung bzw. Weiterverwertung des Materials problematisch, da die als Bindemittel eingesetzten Fremdstoffe erst wieder abgetrennt werden müssen.

In der DE-A 4 214 487 werden ein Verfahren und ein Reaktor zum Entfernen von Verunreinigungen aus Wasser beschrieben. Ein trichterförmiger Reaktor, in dem als Sorbens für Wasserverunreinigungen fein verteiltes Eisenhydroxid in flockiger Form eingesetzt wird, wird horizontal durchströmt. Nachteilig bei diesem Verfahren ist der Einsatz des flockenförmigen Eisenhydroxids, der aufgrund der geringen Dichteunterschiede zwischen Wasser und Eisenhydroxid dazu führt, dass ein derartiger Reaktor nur mit sehr geringen Strömungsgeschwindigkeiten betrieben werden kann und die Gefahr besteht, dass das Sorbens, gegebenenfalls bereits mit Schadstoffen beladen, gemeinsam mit dem Wasser aus dem Reaktor ausgetragen wird.

In JP-A 55 132 633 wird granulierter Rotschlamm als Nebenprodukt der Aluminiumproduktion als Adsorbens für Arsen beschrieben. Dieses setzt sich aus Fe₂O₃, Al₂O₃ und SiO₂ zusammen. Über die Stabilität der Granulate und über das Granulationsverfahren wird hierin nicht berichtet. Ein weiterer Nachteil bei diesem Adsorbens ist die mangelnde Konstanz in der Zusammensetzung des Produktes und die unsichere Verfügbarkeit

In DE-A 19 826186 wird ein Verfahren zur Herstellung eines Eisenhydroxid enthaltenden Adsorptionsmittels beschrieben. Eine wässrige Polymer-Dispersion wird in Eisenhydroxid in in Wasser dispergierbarer Form eingemischt. Diese Mischung wird dann entweder unter Erlangung eines festen Zustandes getrocknet und das feste Material anschließend mechanisch in die gewünschte Form und/oder Größe zerkleinert oder die Mischung wird gegebenenfalls nach einer Vortrocknung einer Formgebung unterzogen und anschließend unter Erlangung eines festen Zustandes endgetrocknet. Dadurch erhält man ein Material, bei welchem das Eisenhydroxid fest in das Polymer eingebettet ist und das eine hohe Bindekapazität für die üblicherweise in Abwässern oder Abgasen enthaltenen Schadstoffe aufweisen soll.

Nachteilig bei diesem Verfahren ist der Einsatz von organischen Bindemitteln, die das aufzubereitende Wasser durch Auswaschung und/oder Abrieb von Organika zusätzlich belasten. Zudem ist eine Beständigkeit bei längerem Einsatz des Adsorberverbunds nicht gewährleistet. Bakterien und anderen Mikroorganismen kann ein organisches Bindemittel zudem als Nährmedium dienen so dass die Gefahr der Besiedlung des Kontaktes mit Mikroorganismen und der Kontamination des Mediums durch dieselben besteht.

Grundsätzlich ist die Anwesenheit von zur Herstellung der Adsorbentien erforderlichen artfremden organischen Hilfsstoffen bei der Aufarbeitung, dem Rezyclieren bzw. der weiteren Verwertung verbrauchter Adsorbentien nachteilig, weil die Verwertung reiner Stoffe weniger problematisch ist als dies bei Stoffgemischen der Fall ist. So sind beispielsweise polymere Bindemittel bei der weiteren Verwertung von Adsorbermaterialien auf Eisenoxidbasis als Pigmente zur Anfärbung von Beton von Nachteil, da diese Bindemittel die Dispergierung des Pigments im Flüssigbeton behindern können.

In der DE-A 4 320 003 wird ein Verfahren zum Entfernen von gelöstem Arsen aus Grundwasser mittels kolloidem oder granuliertem Eisenhydroxid beschrieben. Für die Verwendung von feinen, suspendierten Eisen(III)hydroxid-Produkten wird hier empfohlen, die Eisenhydroxid-Suspension in Fettbettfilter, die mit gekörntem Material oder anderen Trägern mit hoher äußerer oder innerer Porosität gefüllt sind, einzubringen. Auch dieses Verfahren bringt den Nachteil mit sich, dass, bezogen auf das Adsorbens "Substrat + Eisenhydroxid", nur geringe spezifische Beladungskapazitäten erreichbar sind. Außerdem besteht nur eine schwache Bindung zwischen Substrat und Eisenhydroxid, so dass bei einer anschließenden Behandlung mit arsenhaltigem Wasser die Gefahr des Austrags von Eisenhydroxid bzw. Eisenarsenat besteht. In dieser Druckschrift wird weiterhin der Einsatz von granuliertem Eisenhydroxid als Adsorbermaterial für einen Festbettreaktor genannt. Die Herstellung des granulierten Eisenhydroxids erfolgt über eine Gefrier-Konditionierung (Gefriertrocknung) von durch Neutralisation von sauren Eisen(III)salz-Lösungen erhaltenem Eisenhydroxid bei Temperaturen unter minus 5° C. Dieser Herstellungsprozess ist in hohem Maße energieaufwendig und führt zu stark salzbelasteten Abwässern. Außerdem werden als Ergebnis dieses Herstellungsprozesses lediglich sehr kleine Körnchen mit geringer mechanischer Stabilität erhalten. Dies führt bei einem Einsatz in einem Festbettreaktor dazu, dass sich das Kornspektrum durch mechanische Abrasion der Teilchen im Verlaufe des Betriebs deutlich verringert, was wiederum zu Folge hat, dass feindisperse Partikel von beladenem oder unbeladenem Adsorptionsmittel aus dem Reaktor ausgetragen werden. Ein weiterer Nachteil dieser Granulate ist, dass die Adsorptionsfähigkeit gegenüber Arsenverbindungen erheblich vermindert wird, wenn die Granulate, z.B. durch längere Trockenstandzeit, Wasser verlieren.

Zur Wasseraufbereitung werden bevorzugt kontinuierlich betriebene Adsorber eingesetzt, die häufig in Gruppen parallel angeordnet betrieben werden. Um beispielsweise Trinkwasser von organischen Verunreinigungen zu befreien, werden derartige Adsorber mit Aktivkohle beschickt. Zu Spitzenverbrauchszeiten werden dann die vorhandenen Adsorber parallel betrieben, um die Strömungsgeschwindigkeit nicht über das auslegungsbedingte Maximum hinaus ansteigen zu lassen. Während Zeiten niedrigeren Wasserverbrauchs werden einzelne Adsorber aus dem Betrieb genommen und können währenddessen beispielsweise gewartet werden, wobei das Adsorbermaterial besonderen Belastungen ausgesetzt ist, wie weiter unten näher ausgeführt wird.

Die GB 1568349 offenbart pulverförmige magnetische Adsorber für die Slurry-Adsorption enthaltend Composite aus magnetischen Eisenoxiden und Titan(hydr)oxiden.

In der US 4,459,370 werden pulverförmige Adsorber, bestehend aus feinteiligem Siliciumdioxid, der mit feinteiligem -FeOOH beschichtet ist, beschrieben.

Auch der Einsatz von Granulaten, die man durch Kompaktieren von z.B. pulverförmigem Eisenoxid durch Anwendung hoher Linienkräfte erzeugen kann, wurde bereits erwogen. Derartige Granulate sind bereits beschrieben worden, um Flüssigbeton homogen anzufärben. Die Anwendung hoher Linienkräfte beim Kompaktieren ist in hohem Maße energie- und kostenaufwendig und die Stabilität der Kompaktate ist bei längerem Einsatz in Adsorbern ungenügend. Daher kommen derartige für den Einsatz in z.B. Adsorbern, insbesondere kontinuierlich betriebenen, bei der Reinigung von Wasser nur bedingt in Betracht. Insbesondere bei der Wartung bzw. Reinigung der Adsorberanlagen durch Rückspülung (s. unten) verlieren derartige Granulate durch die damit verbundene Agitation derselben große Mengen Substanz. Das Rückspül-Abwasser ist durch den Abrieb stark eingetrübt. Dies ist aus mehreren Gründen nicht akzeptabel: Zunächst einmal geht Adsorbermaterial verloren, welches nach einer längen Standzeit hoch mit Verunreinigungen beladen und daher toxikologisch bedenklich ist. Dann wird der Abwasserstrom mit dem Abrieb belastet, der sedimentieren kann und so zur Beeinträchtigung der Rohrleitungssysteme führt und letztlich die Kläranlage physikalisch und toxikologisch unerwünscht belastet, um nur einige Gründe zu nennen.

Der vorliegenden Erfindung lag daher die Aufgabe zugrunde, einen Kontakt bzw. ein Adsorptionsmittel/Reaktionsmittel auf Basis von Eisen-Sauerstoff Verbindungen in stückiger Form zu identifizierer, das hohe mechanische Stabilität verbunden mit einem hohen Bindevermögen für in Flüssigkeiten und Gasen enthaltenen Schadstoffe aufweist ohne dass organische Bindemittel zur Erlangung ausreichender mechanischer Stabilität eingesetzt werden müssen, die in vorteilhafter Weise zur Reinigung von Gasen oder Flüssigkeiten geeignet sind.

Die Kontakte bzw. Adsorptionsmittel/Reaktionsmittel bestehend aus α -FeOOH - Partikeln, die durch Aluminium-, Magnesium- bzw. Titan(hydr)oxide miteinander verklebt sind, lösen diese komplexe Aufgabe.

Hierbei handelt es sich um Adsorptionsmittel/Reaktionsmitteln, die - wie Untersuchungen gezeigt haben - eine hohe Bindekapazität für die üblicherweise in Abwässern oder Abgasen enthaltenen Schadstoffe aufweisen und ohne Zusatz organischer Bindemittel oder anorganischer Fremdstoffe mit Bindemittelfimktion bereits eine ausreichende mechanische und hydraulische Stabilität aufweisen.

Da dieses Material nur einen geringen Anteil an Fremdstoff-Bindenütteln aufweist, hat es gegenüber Adsorbern des Stand der Technik zudem den Vorteil, dass es, erforderlichenfalls nach der Ablösung bzw. Entfernung der adsorbierten Schadstoffe, als ganzes entsorgt oder anderen Anwendungen zugeführt weren kann, so zum Beispiel nach Aufmahlung für die Einfärbung von Beton und anderen Baustoffen sowie üblichen Pigmentanwendungen in Kunststoffen, Farben und Lacken oder zur Einfärbung von anderen Substraten wie Rindenmulch oder geschreddertem Holz, da die Menge der Zuschlagsstoffe sich auf die Farbgebung nicht allzu nachteilig auswirkt.

Das Adsorptionsmittel/Reaktionsmittel ist erhältlich, indem α-FeOOH in fester, halbfester oder suspendierter Form durch Zugabe von Al(OH)₃ und/oder Mg(OH)₂ in Suspension oder in gelartiger Form mit variablem Wassergehalt vermischt werden und diese Mischung dann vollständig oder unter Beibehaltung eines gewissen Wassergehaltes beispielsweise durch Filtration oder Verdampfung entwässert wird und das feste oder halbfeste Material anschließend mechanisch in die gewünschte Form und/oder Größe zerkleinert wird, oder die Dispersion wird, gegebenenfalls nach einer Vortrocknung im halbfesten Zustand, einer mechanischen Formgebung und anschließenden (weiteren) Trocknung unter Erlangung eines festen Zustandes unterzogen. Dabei wird das α-FeOOH fest in die FremdstoS-oxid- bzw. -hydroxid-Matrix eingebettet.

Die Verfestigung α-FeOOH-Partikel kann auch in situ erfolgen: Entweder, man legt sich eine alkalische Suspension des α-FeOOH vor, gibt wässrige Salze von Al³⁺, Mg²⁺, Ti⁴⁺ oder Mischungen davon soweit zu, so dass ausreichend schwerlösliche Niederschläge von Al(OH)₃, Mg(OH)₂, TiO(OH)₂ bzw. Alterungs- und dehydratisierte Folgeprodukte derselben auf die suspendierten α-FeOOH-Partikel auffällen, oder man fällt in umgekehrter Weise auf die in Al³⁺-, Mg²⁺-, Ti⁴⁺- Lösungen suspendierten α-FeOOH-Partikel durch Zugabe von Alkalien, wie z. B. NaOH, Ca(OH)₂, KOH, CaCO₃, Na₂CO₃, K₂CO₃, NH₄OH die schwerlöslichen Niederschläge wie Al(OH)₃, Mg(OH)₂, TiO(OH)₂ bzw. deren Alterungs- und Folgeprodukte auf. Das Aluminiumoxid bzw. Aluminium(oxi)hydroxid kann auch aus einer Aluminatsuspension (z. B. NaAlO0₂) auf die α-FeOOH-Partikel aufgefällt werden.

Die Entwässerung durch Verdampfung wird vorzugsweise dann angewendet, wenn die zu entwässernden Suspensionen weitgehend salzfrei sind und/oder an die erzeugten Endprodukte weniger hohe Anforderunge an die mechanische Festigkeit im Betrieb gestellt werden.

Alternativ entwässert man durch Filtration. Dabei ist es möglich, zur Verbesserung des Filtrationsverhaltens der Suspensionen übliche filtrationsverbessernde Maßnahmen anzuwenden wie sie z.B. in Solid-Liquid Filtration and Separation Technology, A. Rushton, A.S., Ward R.G., Holdich, 2. Aufl. 2000, Wiley-VCH, Weinheim sowie Handbuch der Industiellen Fest/Flüssig-Filtration, H. Gasper, D. Öchsle, E. Pongratz, 2. Aufl. 2000, Wiley-VCH Weinheim beschrieben sind. So können den Suspensionen zum Beispiel Flockungsmittel zugesetzt werden.

Die Adsorptionsmittel/Reaktionsmittel können einer Trocknung an Luft, und/oder im Vakuum, und/oder im Trockenschrank und/oder auf Bandtrocknern oder in Sprühtrocknern bei Temperaturen im Bereich von 5 bis 300° C unterzogen werden. Auch eine Gefriertrocknung des Materials ist möglich.

Die Produkte haben vorzugsweise einen Restwassergehalt von weniger als 20 Gew.-%.

Die Zerkleinerung des Materials erfolgt vorzugsweise durch Aufmahlung auf Körnungen von einer Größe im Bereich zwischen 0,5 und 20 mm. Die mechanische Formgebung des halbfesten Materials findet vorzugsweise in einer Granulier-bzw. Pelletieranlage oder in einer Strangpresse statt, wobei Formkörper mit einer Größe im Bereich von 0,5 bis 20 mm Durchmesser bzw. Länge erhalten werden können.

Es wurde gefunden, dass die so erhaltenen Stücke bzw. Granulate eine hohe Bindekapazität für in Gewässern, Flüssigkeiten oder Gasen enthaltene Schadstoffe besitzen und sie zudem eine ausreichend hohe Stabilität gegenüber strömenden Medien hinsichtlich mechanischer oder hydraulischer Beanspruchung besitzen.

Das Produkt besitzt BET-Oberflächen von 50 bis 500 m²/g, bevorzugt von 80 bis 200 m²/g.

Die Primärteilchengröße wurde aus rasterelektronenmikroskopischen Aufnahmen z. B. bei einer Vergrößerung 60000:1 durch Ausmessen bestimmt (Gerät: XL30 ESEM FEG, Fa. Philips). Sind die Primärteilchen nadelförmig, wie z. B. in der Phase von α-FeOOH, lässt sich als Mass für die Teilchengröße die Nadelbreite angeben. Man beobachtet bei nanoteiligen α-FeOOH- Teilchen Nadelbreiten von bis zu 100 nm, in der Hauptsache jedoch zwischen 4 und 50 nm. α-FeOOH Primärteilchen haben üblicherweise ein Länge:Breite-Verhältnis von 5:1 bis zu 50:1, typischerweise von 5:1 bis 20:1. Durch Dotierungen oder spezielle Reaktionsführung lassen sich die Nadelformen jedoch in ihrem Länge:Breite-Verhältnis variieren.

Durch Mischung von α-FeOOH und Aluminium-, Magnesium- bzw. Titan- (hydr)oxiden erkennt man auf den rasterelektronenmikroskopischen Aufnahmen das Vorliegen der gegebenen Pigment- bzw. Keim-Partikel in ihrer bekannten Teilchenmorphologie, welche durch die nanoteiligen Keimpartikel bzw. das Aluminium-, Magnesium- bzw. Titan-(hydr)oxiden untereinander zusammengehalten werden bzw. miteinander verklebt sind.

Gelbe Eisenoxihydroxidpigmente werden in der Regel durch Fällung von Eisen(II)-hydroxiden oder -carbonaten aus entsprechenden Eisen(II)-salzlösungen wie z. B. FeSO₄, FeCl₂ in Reinform oder als Beizereilösungen im sauren oder alkalischen pH-Bereich und anschließender Oxidation zu Eisen(III)-oxihydroxiden synthetisiert (s. u. a. G. Buxbaum, Industrial Inorganic Pigments, VCH Weinheim, 2. Auflage, 1998, S. 231ff). Die Oxidation des zweiwertigen zum dreiwertigen Eisen erfolgt bevorzugt mit Luft, dabei ist eine intensive Begasung von Vorteil. Auch die Oxidation mit H₂O₂ führt zu Eisenoxihydroxiden. Als alkalisches Fällungsmittel wird bevorzugt NaOH eingesetzt. Aber auch andere Fällungsmittel, wie KOH, Na₂CO₃, K₂CO₃, CaO, Ca(OH)₂, CaCO₃, NH₃, NH₄OH, MgO und/ oder MgCO₃ können verwendet werden.

Gegenüber dem Stand der Technik handelt es sich bei der beschriebenen Verwendung um eine Verbesserung. Die Granulate sind im Gegensatz zu solchen des Stands der Technik erheblich belastbarer und weisen somit eine viel größere Abriebsstabilität gegenüber mechanischer und hydraulischer Beanspruchung auf. Sie können direkt als solche eingesetzt werden. Selbst auf das Zerkleinern oder Schroten der zunächst erhaltenen rohen Trockensubstanz aus Filterkuchen oder Strangpressen kann z.B. bei der Anwendung in Adsorberanlagen zur Wasserreinigung verzichtet werden, da sich die groben Stücke bei ihrem Kontakt mit Wasser selbständig zerkleinern. Hierbei entsteht eine statistische Korngrößenverteilung, jedoch keine Partikel einer Größe, die in nennenswertem Maße durch das strömende Medium aus dem Adsorber ausgetragen werden.

Auf eine separate Granulierung, wie sie beim Einsatz herkömmlicher Eisenoxihydroxiden in Form (rieselfähiger) Pulver erforderlich wäre, entweder unter Zuhilfenahme substanzfremder Bindmittel oder höchster Linienkräfte beim Kompaktieren, kann völlig verzichtet werden.

Als andere Methode, Granulate zu erzeugen, hat sich die Granulierung einer halbfeuchten Paste bewährt. Dabei formt man Pellets bzw. Stränge aus einer halbfesten Paste z. B. Mittels eines einfachen Lochblechs, einer Walzenpresse oder eines Extruders und trocknet diese entweder gleich oder bringt diese Extrudate mittels eines Sphäronizers zusätzlich in eine Kugel- oder Granulatform. Die noch feuchten Kügelchen bzw. granulate können im Nachhinein auf einen beliebigen Feuchtigkeitsgehalt nachgetrocknet werden. Damit die Granulate nicht zusammenbacken, empfiehlt sich ein Restfeuchtegehalt von < 50 %. Eine solche Kugelform kann für den Einsatz in Festbettadsorbem wegen der dadurch besseren Schüttung im Adsorberbehälter gegenüber geschroteten Granulaten oder Pellets in Strangform von Vorteil sein.

Besonders bevorzugt werden die Granulate bei der Reinigung von Flüssigkeiten, insbesondere zur Entfernung von Schwermetallen, eingesetzt. Eine in diesem technischen Gebiet bevorzugte Anwendung ist die Dekontamination von Wasser, insbesondere von Trinkwasser. In jüngster Zeit wird der Entfernung von Arsen aus Trinkwasser besondere Aufmerksamkeit gewidmet. Die erfindungsgemäßen Granulate eignen sich hierzu hervorragend, da selbst die niedrigen von der US-Behörde EPA festgesetzten Grenzwerte durch die Verwendung der Granulate nicht nur eingehalten, sondern sogar unterschritten werden können.

Dazu können die Granulate in herkömmliche Adsorberapparaten eingesetzt werden, wie sie derzeit schon, z.B. mit Aktivkohle beschickt, zur Entfernung von Schadstoffen anderer Art in Gebrauch sind. Ein Batchbetrieb, beispielsweise in Zisternen oder ähnlichen Behältnissen, die gegebenenfals mit Rührwerken ausgestattet sind, ist zwar auch möglich. Der Einsatz in kontinuierlich betriebenen Anlagen wie Durchfluß-Adsorbern ist jedoch bevorzugt.

Da zur Trinkwasser aufzubereitendes Rohwasser üblicherweise auch organische Verunreinigungen wie Algen und ähnliche Organismen enthält, belegt sich die Oberfläche von Adsorbern, insbesondere die äußere Oberfläche von granulatförmigem Adsorbens, während des Einsatzes mit zumeist schleimigen Ablagerungen, die den Zutritt des Wassers und damit die Adsorption von zu entfernenden Inhaltsstoffen erschweren oder gar verhindern. Aus diesem Grund werden die Adsorber-Apparate von Zeit zu Zeit mit Wasser rückgespült, was vorzugsweise während Zeiten niedrigen Wasserverbrauchs (s. oben) an einzelnen aus dem Betrieb genommenen Apparaten durchgeführt wird. Hierbei wird das Adsorbens aufgewirbelt, und durch die hiermit verbundene mechanische Beanspruchung der Oberfläche wird der unerwünschte Belag entfernt und entgegen der Fließrichtung im Nutzbetrieb ausgetragen. Das Waschwasser wird üblicherweise einer Kläranlage zugeführt. Hierbei bewähren sich die Adsorbentien ganz besonders gut, da deren hohe Festigkeit eine Reinigung in kurzer Zeit ermöglicht, ohne dass nennenswerte Verluste an Adsorbermaterial zu verzeichnen wären bzw. das dem Abwasser zugeführte Rückspülwasser reich an ausgetragenem Adsorbermaterial, gegebenenfalls schon hoch mit Schwermetallen beladen, ist.

Da die Granulate frei von artfremden Bindmitteln sind, ist das Material nach Gebrauch vergleichsweise einfach zu entsorgen. So kann das Adsorbierte Arsen z.B. in speziellen Apparaturen thermisch oder chemisch entfernt werden, und man erhält als reinen Stoff ein Eisenoxidpigment, welches entweder zum Zweck der gleichen Anwendung rezycliert oder herkömmlichen Pigmentanwendungen zugeführt werden kann. Je nach Anwendung und gesetzlichen Bestimmungen kann der Adsorberinhalt auch ohne die vorherige Entfernung der Schwermetalle beispielsweise als Pigment zur Einfärbung dauerhafter Konstruktionsmaterialien wie Beton verwendet werden, da die dem Trinkwasser entzogenen Schwermetalle auf diese Weise dauerhaft immobilisiert und dem Wasserkreislauf entzogen werden. Die Bestimmung der spezifischen Oberfläche der Produkte nach BET erfolgt über das Trägergasverfahren (He:N₂=90:10) nach der Einpunkt-Methode, gemäß DIN 66131 (1993). Vor der Messung wird die Probe 1 h bei 140 °C im trockenen Stickstoffstrom ausgeheizt.

Zur Messung der Adsorption von Arsen(III) und Arsen(V) werden in einer 5L PE-Flasche über einen bestimmten Zeitraum 3L einer wässrigen Lösung von NaAsO₂ oder Na₂HAsO₄ mit der jeweils angegebenen Ausgangskonzentration von ca. 2-3 mg/L Arsen mit 3 g der zu untersuchenden Probe behandelt und dabei die Flasche auf rotierenden Walzen in Bewegung versetzt. Die Adsorptionsgeschwindigkeit von As-Ionen auf Eisenhydroxid über diesen bestimmten Zeitraum, z.B. eine Stunde, wird angegeben mit mg(As^{3+/5+})/g(FeOOH)·h aus der Differenz zu den in Lösung verbleibenden As^{3+/5+}-Ionen.

Die Bestimmung der Adsorbierten Hg- oder Pb- Mengen erfolgt in analoger Weise.

Die As-, Hg- bzw. Pb-Gehalte des beladenen Eisenoxihydroxids bzw. der Lösungen bestimmt man über die Massenspektrometrie (ICP-MS) gemäß DIN 38406-29 (1999) oder über optische Emissionsspektroskopie (ICP-OES) gemäß EN-ISO 11885 (1998) mit jeweils induktiv gekoppeltem Plasma als Anregungseinheit.

Die Beurteilung der mechanischen und hydraulischen Abriebsfestigkeit erfolgte nach folgender Methode: 10 g des zu untersuchenden Granulats mit Korngrößen >0.1 mm wurden in einem 500 mL Erlenmeyerkolben mit 150 mL VE-Wasser versetzt und auf einer Schüttelmaschine LabShaker (Modell Kühner, Fa. Braun) über einen Zeitraum von 30 Minuten mit 250 Umdrehungen/Minute in Rotation versetzt. Anschließend wurde von der Suspension mittels eines Siebs der Anteil >0.1 mm isoliert, getrocknet und gewogen. Das Gewichtsverhältnis zwischen Auswaage und Einwaage bestimmt den Abriebswert in %.

Die Erfindung wird im Folgenden anhand von Beispielen näher erläutert. Die Beispiele sollen der Illustration des Verfahrens dienen und stellen keine Einschränkung dar.

### Beispiel:

Zu 1 L einer Suspension von Bayferrox^{®} 920 mit einem Feststoffgehalt von 50 g/L FeOOH wurden 569 mL einer MgSO₄-Lösung (100 g/L) versetzt, anschließend unter Rühren mit 173 g einer 24 %-igen NaOH-Lösung versetzt und 15 Min. nachgerührt. Die gelbe Suspension wird auf einer Nutsche auf eine Restleitfähigkeit des Filtrats von 1 mS/cm gewaschen, der Filterkuchen bei 75 °C im Trockenschrank auf eine Restfeuchte von < 2 % getrocknet. Das Produkt wurde auf Korngrößen zwischen 0.5 und 2 mm granuliert und die Granulate zur Arsenadsorption eingesetzt.

Das Produkt besteht laut Röntgendiffraktogramm aus α-FeOOH und Mg(OH)₂. Aus der rasterelektronenmikroskopischen Aufnahme z. B. mit der Vergrößerung von 60000:1 sieht man, dass die Nadeln des α-FeOOH-Typs von amorphen Schichten miteinander verklebt bzw. agglomeriert sind. Die spezifische Oberfläche nach BET betrug 43 m²/g und hat sich damit, verglichen mit Bayferrox^{®} 920 (BET ca. 15 m²/g). Der Abriebswert betrug nach 30 Minuten lediglich 11 %.

Die Adsorptionsgeschwindigkeit bezüglich einer wässrigen NaAsO₂-Lösung mit einer Ausgangskonzentration von 2.6 mg/L (As³⁺) betrug 1.2 mg(As³⁺)/g(FeOOH)•h, bezüglich einer Na₂HAsO₄-Lösung mit einer Ausgangskonzentration von 2.7 mg/L (As⁵⁺) betrug 1.5 mg(As⁵⁺)g(FeOOH)•h.

## Patentansprüche

1. Verwendung von stückigen Adsorptionsmitteln/Reaktionsmitteln bestehend aus -FeOOH - Partikeln, die durch Aluminium-, Magnesium- bzw. Titan(hydr)oxide miteinander verklebt sind, zur Reinigung von Gasen oder Flüssigkeiten.

2. Verwendung nach Anspruch 1, **dadurch gekennzeichnet, dass** die Reinigung von Gasen oder Flüssigkeiten eine Wasseraufbereitung ist.

3. Verwendung nach Anspruch 2, **dadurch gekennzeichnet, dass** die Wasseraufbereitung in einem Wasserwerk erfolgt.

4. Verwendung nach den Ansprüchen 2 oder 3, **dadurch gekennzeichnet, dass** die Wasseraufbereitung die Entfernung von Schwermetallen, sowie Phosphor-, Antimon-, Beryllium, Selen-, Tellur- sowie Cyanoverbindungen aus Wasser umfasst.

5. Verwendung nach den Ansprüchen 2 oder 3, **dadurch gekennzeichnet, dass** die Wasseraufbereitung die Entfernung von Arsenverbindungen aus Wasser umfasst.

## Claims

1. Use of adsorption agents/reaction agents in piece form consisting of α-FeOOH particles, which are glued together by aluminium, magnesium and/or titanium (hydr)oxides, for purifying gases or liquids.

2. Use according to Claim 1, **characterized in that** the purification of gases or liquids is a water treatment operation.

3. Use according to Claim 2, **characterized in that** the water treatment operation takes place in a waterworks.

4. Use according to either of Claims 2 or 3, **characterized in that** the water treatment operation comprises the removal of heavy metals and phosphorus compounds, antimony compounds, beryllium compounds, selenium compounds, tellurium compounds and cyano compounds from water.

5. Use according to either of Claims 2 or 3, **characterized in that** the water treatment operation comprises the removal of arsenic compounds from water.

## Revendications

1. Utilisation d'agents adsorbants/réactifs en morceaux, composés de particules α-FeOOH, qui sont collés l'un à l'autre par des (hydr)oxydes d'aluminium, de magnésium ou de titane, pour l'épuration de gaz ou de liquides.

2. Utilisation selon la revendication 1, **caractérisée en ce que** l'épuration de gaz ou de liquides est un traitement des eaux.

3. Utilisation selon la revendication 2, **caractérisée en ce que** le traitement des eaux est effectué dans une usine de distribution d'eau.

4. Utilisation selon les revendications 2 ou 3, **caractérisée en ce que** le traitement des eaux comprend l'élimination de métaux lourds, ainsi que des composés du phosphore, de l'antimoine, du béryllium, du sélénium, du tellure ainsi que des composés de cyanures hors de l'eau.

5. Utilisation selon les revendications 2 ou 3, **caractérisée en ce que** le traitement des eaux comprend l'élimination des composés de l'arsenic hors de l'eau.
